# EUROPEAN PATENT SPECIFICATION

(11) **EP 1 818 189 B1**
(45) Date of publication and mention of the grant of the patent: **01.09.2010**
(21) Application number: 05809618.1
(22) Date of filing: 28.11.2005
(51) Int. Cl.: B60C 11/04

(54) **PNEUMATIC TIRE**
LUFTREIFEN
BANDAGE PNEUMATIQUE

(30) Priority: 30.11.2004 JP 2004346258
(43) Date of publication of application: 15.08.2007
(73) Proprietor: THE YOKOHAMA RUBBER CO., LTD., Tokyo 105-8685 (JP)
(72) Inventor: YAMANE, Kenji, c/o The Yokohama Rubber Co., Ltd., Hiratsuka-shi, Kanagawa 2548601 (JP)
(74) Representative: Wiedemann, Peter
(86) International application number: PCT/JP2005/021777
(87) International publication number: WO 2006/059560

(56) References cited:
- EP-A- 0 704 324
- EP-A- 1 029 712
- JP-A- 6 040 215
- JP-A- 06 040 215
- JP-A- 2000 135 904
- JP-A- 2000 229 506
- JP-A- 2003 011 616
- JP-A- 2003 011 616
- JP-A- 2004 017 863
- JP-A- 2004 017 863
- JP-A- 2004 262 312

## Description

### TECHNICAL FIELD

The present invention relates to pneumatic tires, and more particularly, to a pneumatic tire adapted especially for passenger cars, which can improve uneven wear while maintaining drainage characteristics.

### TECHNICAL BACKGROUND

Conventionally, there are pneumatic tires, in particular pneumatic passenger tires, including a tread surface having lateral grooves provided in its center region at predetermined intervals in the circumferential direction of the tires in order to enhance an effect of cutting water screen on road surfaces and removing it, the lateral grooves being inclined at a relatively small angle of, for example, about 10 to 45 degrees with respect to the tire circumferential direction. One of such pneumatic tires is arranged such that the inclined lateral grooves communicate at one ends with one circumferential groove and does not communicate at the other ends with another circumferential groove, the other ends being located within a rib.

This pneumatic tire can effectively drain water that has flowed into the lateral grooves by cutting water screen on road surfaces from the one ends of the lateral grooves to the one circumferential groove communicating therewith; however, since the other ends of the lateral grooves does not communicate with the another circumferential groove, the water flowed thereinto by cutting the water screen can not effectively be drained to the another circumferential groove; as a result, drainage characteristics have to be lowered.

To solve the above problem, there has been proposed a pneumatic tire having assistant grooves that extend from the center regions of the lateral grooves and communicate with the another circumferential groove (see Japanese Patent Application Kokai Publication No. 2004-17863 , for example). The water flowing toward the other end side within the lateral grooves is drained through the assistant grooves, thereby improving drainage characteristics.

However, blocks that are small in contact area are defined by the another circumferential groove, lateral grooves, and assistant grooves adjacent the another circumferential groove; therefore, tread rigidity is locally lowered in the region where the blocks exist, thereby suffering from a problem in that the tread is subject to uneven wear.

Similar prior art pneumatic tires to those described above are known from US 6, 439, 286 B1; JP-A-2003-011 616; and JP-A-6040215. JP-A-6040215 discloses a combination of features falling within the scope of the preamble of Claim 1.

### SUMMARY OF THE INVENTION

According to the present invention, there is provided a pneumatic tire having a tread surface (1) having a center region (1C), the tread surface comprising: a first circumferential groove (2) extending in a circumferential direction (T) of the tire at an equatorial plane (EP) of the tire in the tread surface center region (1C); second circumferential grooves (3) extending in the circumferential direction (T) of the tire on each side of the first circumferential groove (2) in the center region (1C); and a middle rib (4, 5) on each side of the first circumferential groove (2) defined by the first circumferential groove (2) and the respective second circumferential groove (3); middle lateral grooves (8, 9) obliquely extending in a widthwise direction of the tire and disposed at predetermined intervals in the circumferential direction (T) of the tire in the middle ribs (4, 5), only one terminal end (8b, 9b) of each of the middle lateral grooves (8) communicating with one circumferential groove (3) of the first circumferential groove (2) and the respective second circumferential groove (3), wherein the one terminal end of each middle lateral groove (8, 9) communicates with the respective second circumferential groove (3); and an assistant groove (10, 11) provided between each of adjacent middle lateral grooves (8, 8, or 9, 9), the assistant groove (10, 11) extending in such an inclined manner that an inclination direction thereof with respect to the circumferential direction (T) of the tire is opposite to that of the middle lateral grooves (8, 8 or 9, 9) **characterized in that**: one block (18, 19) is defined in each rib (4, 5) by the respective assistant groove (10, 11), respective adjacent middle lateral grooves (8, 8 or 9, 9) and the respective second circumferential groove (3); the adjacent middle lateral grooves (8, 9) each include a first inclined groove portion (8X, 9X) communicating with the respective second circumferential groove (3) and a second inclined groove portion (8Y, 9Y) connected to the first inclined groove portion (8X, 9X), the first inclined groove portion (8X, 9X) having an inclination angle α ranging from 35 degrees to 60 degrees with respect to the circumferential direction (T) of the tire, the second inclined groove portion (8Y, 9Y) having an inclination angle β ranging from 0 degree to 30 degrees with respect to the circumferential direction (T) of the tire; the assistant groove (10, 11) has opposing terminal ends (10a, 10b or 11a, 11b) that communicate with the adjacent middle lateral grooves (8, 8), one terminal end (10a, 11a) of the opposing terminal ends (10a, 10b or 11a, 11b) of the assistant groove (10, 11) being located at a position ranging from 20 % to 30 % of a tire-widthwise length (L1) of one middle lateral groove (8, 9) of the adjacent middle lateral grooves (8, 8 or 9, 9) from the one terminal end (8b, 9b) of the one middle lateral groove (8, 9) toward a side of the other terminal end (8a, 9a) of the one middle lateral groove (8, 9) in the widthwise direction of the tire, the other terminal end (10b, 11b) of the opposing terminal ends (10a, 10b or 11a, 11b) of the assistant groove (10, 11) being located at a position ranging from 20 % to 30 % of a tire-widthwise length (L2) of the other middle lateral groove (8, 9) of the adjacent middle lateral grooves (8, 8, or 9, 9) from the other terminal end (8a) of the other middle lateral groove (8, 9) toward a side of the one terminal end (8b, 9b) of the other middle lateral groove (8, 9) in the widthwise direction of the tire.

An advantage obtainable with embodiments of the present invention is to provide a pneumatic tire having assistant grooves to enhance drainage characteristics in which uneven wear can be reduced, maintaining drainage characteristics.

With embodiments of the present invention, the assistant grooves obliquely disposed between the middle lateral grooves communicate with the middle lateral grooves at positions described above, whereby the individual blocks defined by the respective second circumferential groove, adjacent middle lateral grooves, and the respective assistant groove becomes larger than before, which can make the rigidity of the blocks higher. Therefore, conventionally problematic uneven wear due to the blocks can be suppressed, improving uneven wear resistance.

In addition to the structure having the assistant grooves that communicate with the middle lateral grooves as described above, the middle lateral grooves each comprise a first inclined groove portion communicating with the one circumferential groove and a second inclined groove portion connected thereto, and the inclination angles *α* and *β* thereof are specified in the above ranges, whereby drainage characteristics can be maintained at the same level as those of the prior art.

### BRIEF DESCRIPTION OF THE DRAWINGS

To enable a better understanding of the present invention, and to show how the same may be carried into effect, reference will now be made, by way of example only, to the accompanying drawings, in which:

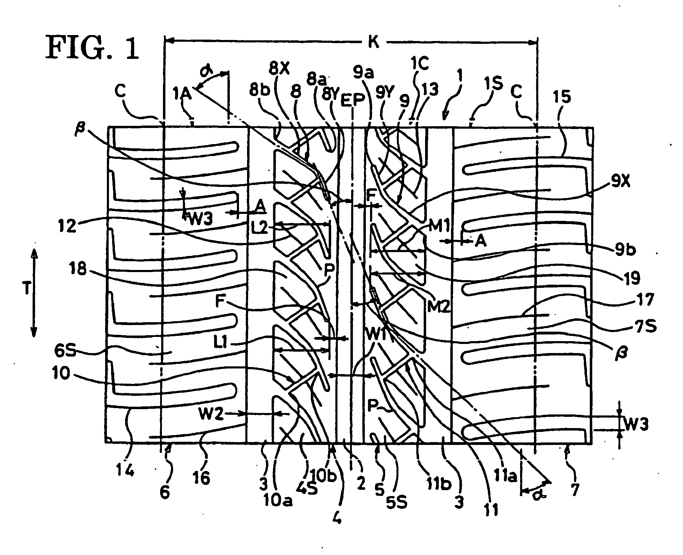

FIG. 1 is a partial development view of a tread surface showing an embodiment of a pneumatic tire according to the present invention.

### DETAILED DESCRIPTION

An embodiment of the present invention will be described in detail below with reference to the attached drawing.

Referring to FIG. 1, there is shown an embodiment of a pneumatic tire according to the present invention; reference numeral 1 denotes a tread surface. The tread surface 1 has a plurality of circumferential grooves that extend in the circumferential direction T of the tire. These plurality of circumferential grooves comprise a first circumferential groove 2 located at the equatorial plane EP of the tire, and two second circumferential grooves 3 disposed on both sides of the tire equatorial plane EP away a prescribed interval (substantially equidistantly) from the tire equatorial plane. Middle ribs 4 and 5 that annularly extend in the tire circumferential direction T are formed between the first circumferential groove 2 and the second circumferential grooves 3 and 3 in the center region 1C of the tread surface 1. Outer ribs 6 and 7 that annularly extend in the tire circumferential direction T are formed in the shoulder regions 1S of the tread surface 1 located tire-widthwisely outwardly of the second circumferential grooves 3 and 3.

The middle ribs 4 and 5 include contact faces (portions of the tread surface) 4S and 5S, which have middle lateral grooves 8 and 9 that extend tire-widthwisely inwardly from the second circumferential grooves 3 and 3 and are disposed at prescribed intervals in the tire circumferential direction T. The middle lateral grooves 8 provided in the middle rib 4 obliquely extend from one of the second circumferential grooves 3 toward one side of the tire circumferential direction (downside in the drawing) to the vicinity of the first circumferential groove 2, and each have an inner terminal end 8a that does not communicate with the first circumferential groove 2 but is located within the middle rib 4. The middle lateral grooves 9 provided in the middle rib 5 obliquely extend from the other of the second circumferential grooves 3 toward the other side of the tire circumferential direction (upside in the drawing) to the vicinity of the first circumferential groove 2, and each have an inner terminal end 9a that does not communicate with the first circumferential groove 2 but is located within the middle rib 5.

The middle lateral grooves 8 and 9 have outer terminal ends 8b and 9b that communicate with the second circumferential grooves 3 and 3, and are gradually greater in width from the inner terminal ends 8a and 9a toward the outer terminal ends 8b and 9b. The middle lateral grooves 8 and 9 include first inclined groove portions 8X and 9X that communicate with the second circumferential grooves 3 and 3, and second inclined groove portions 8Y and 9Y connected thereto; the first inclined groove portions 8X and 9X which extend straight are connected to the second inclined groove portions 8Y and 9Y which extend straight in a bending manner.

The first inclined groove portions 8X and 9X each have an inclination angle *α* ranging from 35 degrees to 60 degrees with respect to the tire circumferential direction T. The second inclined groove portions 8Y and 9Y each have an inclination angle ranging from 0 degree to 30 degrees with respect to the tire circumferential direction T.

There is provided between each of adjacent middle lateral grooves 8 and 8 an assistant groove 10 extending in such an inclined manner that its inclination direction with respect to the tire circumferential direction T is opposite to that of the middle lateral grooves 8. The assistant groove 10 has one terminal end 10a that communicates with the first inclined groove portion 8X of one (lower middle lateral groove in the drawing) of the adjacent middle lateral grooves 8 and 8, and the other terminal end 10b that communicates with the second inclined groove portion 8Y of the other (upper middle lateral groove in the drawing) of the adjacent middle lateral grooves 8 and 8. A block 18 is defined by the assistant groove 10, the middle lateral grooves 8 and 8, and the one second circumferential groove 3 in the middle rib 4.

The inner terminal end 10a of the assistant groove 10 is, if L1 (mm) is the tire widthwise length (length measured in parallel to the tire axis) of the one middle lateral groove 8 with which the inner terminal end communicates, located in the range from 0.2L1 to 0.3L1 (20 to 30 % of the tire widthwise length L1) from the outer terminal end 8b toward the inner terminal end 8a side of the one middle lateral groove 8 in the tire widthwise direction (tire axis direction). The outer terminal end 10b of the assistant groove 10 is, if L2 (mm) is the tire widthwise length (length measured in parallel to the tire axis) of the other middle lateral groove 8 with which the outer terminal end communicates, located in the range from 0.2L2 to 0.3L2 (20 to 30 % of the tire widthwise length L2) from the inner terminal end 8a toward the outer terminal end 8b side of the other middle lateral groove 8 in the tire widthwise direction.

There is also provided between each of adjacent middle lateral grooves 9 and 9 an assistant groove 11 extending in such an inclined manner that its inclination direction with respect to the tire circumferential direction T is opposite to that of the middle lateral grooves 9. The assistant groove 11 has one terminal end 11a that communicates with the first inclined groove portion 9X of one (upper middle lateral groove in the drawing) of the adjacent middle lateral grooves 9 and 9, and the other terminal end 11b that communicates with the second inclined groove portion 9Y of the other (lower middle lateral groove in the drawing) of the adjacent middle lateral grooves 9 and 9. A block 19 is defined by the assistant groove 11, the middle lateral grooves 9 and 9, and the other second circumferential groove 3 in the middle rib 5.

The inner terminal end 11a of the assistant groove 11 is, if M1 (mm) is the tire widthwise length (length measured in parallel to the tire axis) of the one middle lateral groove 9 with which the inner terminal end communicates, located in the range from 0.2M1 to 0.3M1 (20 to 30 % of the tire widthwise length M1) from the outer terminal end 9b toward the inner terminal end 9a side of the one middle lateral groove 9 in the tire widthwise direction. The outer terminal end 11b of the assistant groove 11 is, if M2 (mm) is the tire widthwise length (length measured in parallel to the tire axis) of the other middle lateral groove 9 with which the outer terminal end communicates, located in the range from 0.2M2 to 0.3M2 (20 to 30 % of the tire widthwise length M2) from the inner terminal end 9a toward the outer terminal end 9b side of the other middle lateral groove 9 in the tire widthwise direction.

There is provided between each of adjacent middle lateral grooves 8 and 8 a middle narrow groove 12 that is smaller in width than the middle lateral grooves 8 and tire-widthwisely extend in such an inclined manner that its inclination direction is the same as that of the middle lateral grooves 8; the middle narrow grooves 12 and the middle lateral grooves 8 are alternately disposed in the tire circumferential direction T in the rib 4. The middle narrow groove 12 has opposing terminal ends that are located within the middle rib 4 and do not communicate with the first circumferential groove 2 and the one second circumferential groove 3.

There is also provided between each of adjacent middle lateral grooves 9 and 9 a middle narrow groove 13 that is smaller in width than the middle lateral grooves 9 and tire-widthwisely extend in such an inclined manner that its inclination direction is the same as that of the middle lateral grooves 9; the middle narrow grooves 13 and the middle lateral grooves 9 are alternately disposed in the tire circumferential direction T in the rib 5. Each middle narrow groove 13 has opposing terminal ends that are located within the middle rib 5 and do not communicate with the first circumferential groove 2 and the other second circumferential groove 3.

As described above, the middle lateral grooves 8 and 9 and the middle narrow grooves 12 and 13 are alternately placed in the middle ribs 4 and 5, thereby dispersing the frequency of noise due to the middle lateral grooves 8 and 9 to reduce noise. There is no particular limitation to the widths of the middle narrow grooves 12 and 13 if they are smaller in width than the middle lateral grooves 8 and 9; for example, grooves having widths of about 0.5 to 3.0 mm are preferably used therefor.

The outer ribs 6 and 7 include contact faces (portions of the tread surface) 6S and 7S, which have tire-widthwisely extending outer lateral grooves 14 and 15 that are disposed at prescribed intervals in the tire circumferential direction T. The outer lateral grooves 14 provided in the outer rib 6 extend tire-widthwisely outwardly from positions away from the one second circumferential groove 3 beyond one of the contact ends C of the tire in a slightly inclined manner toward the one side of the tire circumferential direction (downside in the drawing). The outer lateral grooves 15 provided in the outer rib 7 extend tire-widthwisely outwardly from positions away from the other second circumferential groove 3 beyond the other of the contact ends C of the tire in a slightly inclined manner toward the other side of the tire circumferential direction (upside in the drawing).

There is provided between each of adjacent outer lateral grooves 14 and 14 an outer narrow groove 16 that is smaller in width than the outer lateral grooves 14 and tire-widthwisely extend in such an inclined manner that its inclination direction is the same as that of the outer lateral grooves 14; the outer narrow grooves 16 and the outer lateral grooves 14 are alternately disposed in the tire circumferential direction T in the rib 6. Each outer narrow groove 16 extends tire-widthwisely outwardly from the one second circumferential groove 3 beyond the one contact end C.

There is also provided between each of adjacent outer lateral grooves 15 and 15 an outer narrow groove 17 that is smaller in width than the outer lateral grooves 15 and tire-widthwisely extend in such an inclined manner that its inclination direction is the same as that of the outer lateral grooves 15; the outer narrow grooves 17 and the outer lateral grooves 15 are alternately disposed in the tire circumferential direction T in the rib 7. Each outer narrow groove 17 extends tire-widthwisely outwardly from the other second circumferential groove 3 beyond the other contact end C.

As described above, the outer lateral grooves 14 and 15 and the outer narrow grooves 16 and 17 are alternately placed in the outer ribs 6 and 7, thereby dispersing the frequency of noise due to the outer lateral grooves 14 and 15 to reduce noise. There is also no particular limitation to the widths of the outer narrow grooves 16 and 17 if they are smaller in width than the outer lateral grooves 14 and 15; grooves having widths of about 0.5 to 3.0 mm are preferably used therefore as the above middle narrow grooves 12 and 13.

According to the present invention, the assistant grooves 10 and 11 that are obliquely disposed between each of adjacent middle lateral grooves 8 and 8, and between each of adjacent middle lateral grooves 9 and 9 communicate with the middle lateral grooves 8 and 9 at the communicating positions described above, whereby the blocks 18 and 19 defined by the second circumferential grooves 3 and 3, middle lateral grooves 8 and 9, and assistant grooves 10 and 11 become larger than before, which can make the rigidity of the blocks higher; therefore, unevenwear due to the blocks 18 and 19 can be suppressed, improving uneven wear resistance.

In addition to the structure that makes the assistant grooves 10 and 11 communicate with the middle lateral grooves 8 and 9 as described above, the inclination angles *α* and *β* of the first inclined groove portions 8X and 9X and the second inclined groove portions 8Y and 9Y constituting the middle lateral grooves 8 and 9 are specified in the above ranges, whereby drainage characteristics can be maintained at the same level as those of the prior art.

If the one terminal ends 10a and 11a of the assistant grooves 10 and 11 communicate with the first inclined groove portions 8X and 9X of the middle lateral grooves 8 and 9 at positions that are located nearer to the outer terminal ends 8b and 9b sides of the middle lateral grooves 8 and 9 than the positions of 0.2L1 and 0.2M1 from the outer terminal ends 8b and 9b of the middle lateral grooves 8 and 9, it is difficult to effectively suppress uneven wear due to the blocks 18 and 19. If the one terminal ends 10a and 11a of the assistant grooves 10 and 11 communicate with the first inclined groove portions 8X and 9X of the middle lateral grooves 8 and 9 at positions that are beyond the positions of 0.3L1 and 0.3M1 from the outer terminal ends 8b and 9b of the middle lateral grooves 8 and 9, the distances of the one terminal ends 10a and 11a away from the second circumferential grooves 3 are so long that drainage characteristics are lowered.

If the other terminal ends 10b and 11b of the assistant grooves 10 and 11 communicate with the second inclined groove portions 8Y and 9Y of the middle lateral grooves 8 and 9 at positions that are located nearer to the inner terminal ends 8a and 9a sides of the middle lateral grooves 8 and 9 than the positions of 0.2L2 and 0.2M2 from the inner terminal ends 8a and 9a of the middle lateral grooves 8 and 9, the inclination angles of the assistant grooves 10 and 11 with respect to the tire circumferential direction T are so great that drainage characteristics decrease. If the other terminal ends 10b and 11b of the assistant grooves 10 and 11 communicate with the second inclined groove portions 8Y and 9Y of the middle lateral grooves 8 and 9 at positions that are beyond the positions of 0.3L2 and 0.3M2 from the inner terminal ends 8b and 9b of the middle lateral grooves 8 and 9, it is difficult to effectively suppress uneven wear due to the blocks 18 and 19.

If the inclination angles *α* of the first inclined groove portions 8X and 9X with respect to the tire circumferential direction T are less than 35 degrees, the blocks 18 and 19 each have a corner inclined greatly with respect to the tire circumferential direction T, resulting in a decrease in block rigidity, whereby it is difficult to suppress uneven wear. If the inclination angles α are beyond 60 degrees, it is difficult to maintain drainage characteristics at the prior art level. The inclination angles *α* are preferably equal to or greater than 45 degrees in the case of emphasis on uneven wear resistance, and is preferably equal to or less than 50 degrees in the case of emphasis on drainage characteristics.

If the inclination angles β of the second inclined groove portions 8Y and 9Y with respect to the tire circumferential direction T are less than 0 degree (inclined in an opposite direction with respect to the tire circumferential direction T), it is difficult to maintain drainage characteristics at the prior art level. If the inclination angles exceed 30 degrees also, it is difficult to maintain drainage characteristics at the prior art level. The inclination angles are preferably equal to or less than 15 degrees, more preferably equal to or less than 10 degrees in the case of emphasis on drainage characteristics, and is preferably equal to or greater than 15 degrees, more preferably equal to or greater than 20 degrees in the case of emphasis on uneven wear resistance.

In the present invention, there is no particular limitation to the widths of the assistant grooves 10 and 11, which is suitably adjusted according to tire types; in general, pneumatic tires for passenger cars are preferably arranged such that it ranges from 1.0 mm to 4.0 mm. If the widths of the assistant grooves 10 and 11 are less than 1.0 mm, it is difficult to obtain good drainage characteristics; if the widths of the assistant grooves 10 and 11 are greater than 4.0 mm, it is difficult to maintain good uneven wear resistance.

The connecting positions P of the first inclined groove portions 8X and 9X and the second inclined groove portions 8Y and 9Y are preferably in the range of about 40 % to about 60 % of the tire widthwise lengths of the middle lateral grooves 8 and 9 from the outer terminal ends 8b and 9b of the middle lateral grooves 8 and 9.

The second circumferential grooves 3 and 3 each preferably have a width W2 that is substantially one to three times greater than the width W1 of the first circumferential groove 2. If the width W2 of each of the second circumferential grooves 3 and 3 is smaller than the width W1 of the first circumferential groove 2, it is not preferably because of a bad affection on drainage characteristics. If the width W2 of each of the second circumferential grooves 3 and 3 is greater than three times the width W1 of the first circumferential groove 2, a portion in which tread rigidity is locally lowered is apt to occur, causing uneven wear.

The sum of the widths W1 and W2 of the first circumferential groove 2 and second circumferential grooves 3 and 3 preferably ranges from 20 % to 35 % of the contact width K of the tire. The sum of the widths W1 and W2 that is less than 20 % of the tire contact width K badly affects on drainage characteristics. The sum of the widths W1 and W2 that is greater than 35 % of the tire contact width K causes a decrease in the contact area of the tread surface 1, degrading driving stability.

The middle lateral grooves 8 and 9 each preferably have a width ranging from 1.0 mm to 6.0 mm; the width may be constant or varied within the range.

The distance (length measured in parallel to the tire axis) F (mm) between the first circumferential groove 2 and each of the inner terminal ends 8a and 9a of the middle lateral grooves 8 and 9 away therefrom preferably ranges from 20 % to 40 % of the width W1 of the first circumferential groove 2 (circumferential groove on the side away therefrom) in terms of drainage and noise characteristics.

The outer lateral grooves 14 and 15 each preferably have a width W3 ranging from 30 % to 60 % of the widths W2 of the second circumferential grooves 3 and 3. In general, if a lateral groove has a large width, drainage characteristics are improved, but noise due to the groove increases. Since the outer lateral grooves 14 and 15 are arranged not to communicate with the second circumferential grooves 3 and 3 so that they are short in length, an increase in noise due to the grooves can be prevented even if the widths of the lateral grooves 14 and 15 are made large up to 60 % as described above. If the widths W3 of the outer lateral grooves 14 and 15 are less than 30 % of the widths W2 of the second circumferential grooves 3, drainage characteristics decrease in the shoulder regions 1S of the tread surface 1. If the widths W3 of the outer lateral grooves 14 and 15 are greater than 60 % of the widths W2 of the second circumferential grooves 3, noise due to the outer lateral grooves 14 and 15 is deteriorated.

The distances (lengths measured in parallel to the tire axis) A (mm) between the second circumferential grooves 3 and 3 and the outer lateral grooves 14 and 15 away therefrom are preferably from 20 % to 50 % of the widths W2 of the second circumferential grooves 3 and 3. If the distances A are less than 20 % of the widths W2 of the second circumferential grooves 3 and 3, noise due to the outer lateral grooves 14 and 15 is deteriorated because the outer lateral grooves 14 and 15 become longer accordingly. If the distances A are greater than 50 % of the widths W2 of the second circumferential grooves 3 and 3, drainage characteristics are lowered in the shoulder regions 1S because the outer lateral grooves 14 and 15 become shorter accordingly.

In the above embodiment of the present invention, the middle lateral grooves 8 and 9 extend tire-widthwisely inwardly from the second circumferential grooves 3 and 3; however, the middle lateral grooves 8 and 9 may extend tire-widthwisely outwardly from the first circumferential groove 2; the middle lateral grooves 8 and 9 may be arranged such that only one ends thereof communicate with any of the first circumferential groove 2 and second circumferential grooves 3.

The above-described embodiment shows an example where one first circumferential groove 2 is provided at the equatorial plane EP of the tire; however, the pneumatic tire of the present invention may be one in which two first circumferential grooves 2 and 2 are provided on both sides of the equatorial plane EP of the tire, and the above middle ribs 4 and 5 are disposed between the two circumferential grooves 2 and 2 and second circumferential grooves 3 and 3 located outwardly thereof.

The first inclined groove portions 8X and 9X and second inclined groove portions 8Y and 9Y of the middle lateral grooves 8 and 9 may be arranged so as to extend in curved lines such that the inclination angles *α* and *β* are gradually greater toward the outer terminal ends 8b and 9b of the middle lateral grooves 8 and 9 instead of extending in straight lines.

The tread pattern shown in FIG. 1 is a nondirectional tread pattern in which the grooves are symmetrically disposed with respect to a point at the equatorial plane EP of the tire, but may be a directional tread pattern in which the grooves are symmetrically disposed with respect to a line at the plane EP of the tire, for example.

The present invention is preferably used for pneumatic tires for passenger cars in particular. In the case of pneumatic passenger tires, the tire contact width K described above is the maximum contact width of the tread surface when measured as follows: the tire is mounted on a standard rim specified in JATMA (year 2004 edition); an air pressure of 180 kPa is applied thereto; and the maximum contact width is measured under load of 75 % of the load capacity corresponding to the air pressure of 180 kPa, specified in JATMA (year 2004 edition).

### EXAMPLE 1

Prepared were test tires according to the present invention tires 1 to 3, comparison tires 1 and 2, and conventional tire, each having a tire size of 195/65R15 and a tread pattern shown in FIG. 1, in which the inclination angles *α* and *β* of the first and second inclined groove portions of each middle lateral groove, the communicating position (from the outer terminal end of the one middle lateral groove) of one terminal end and communicating position (from the inner terminal end of the other middle lateral groove) of the other terminal end of each assistant groove communicating with the middle lateral grooves were as shown in Table 1.

The test tires are the same in construction except for the structures shown in Table 1, and are as shown in the following.
Width of First Circumferential Groove: 11 mm
Width of Second Circumferential Groove: 11 mm
Sum of Widths of First and Second Circumferential Grooves: 24 % of the tire contact width K
Connecting Position of First and Second Inclined Groove Portions: 40 % of the tire-widthwise length of the middle lateral groove
Width of Middle Lateral Groove: vary gradually within the range of 1.3 mm to 3.5 mm
Length F between First Circumferential Groove and Inner Terminal End of Middle Lateral Groove away therefrom: 3.5 mm
Width of Outer Lateral Groove: 4 mm
Length A between Second Circumferential Groove and Outer Lateral Groove away therefrom: 4 mm
Width of Assistant Groove: 1.5 mm

Evaluation testing for drainage characteristics and uneven wear resistance was carried out on the test tires according to the following test methods, obtaining the results shown in Table 1.

### Drainage Characteristics

The test tires were seated on 15×6 sized rims, inflated to an air pressure of 180 kPa, and mounted on a passenger car of 2000cc displacement. The maximum lateral acceleration was measured when the car was run drawing a circle having a radius of 100 m. The evaluation results of the measurement values were represented by an index where the conventional tire was 100. As the index value is greater, drainage characteristics are better.

### Uneven Wear Resistance

The test tires were mounted on a passenger car of 2000cc displacement as in the above testing. After the car was run for 8000 km on a public road, the state of uneven wear created in the tread surface was visually observed and evaluated. The evaluation results were represented by an index where the conventional tire was 100. As the index value is greater, uneven wear resistance is better.

**[Table 1]**

| | Conventional Tire | Comparison Tire 1 | Present Invention Tire 1 | Present Invention Tire 2 | Present Invention Tire 3 | Comparison Tire 2 |
|---|---|---|---|---|---|---|
| Inclination Angle α (*) | 40 | 25 | 35 | 50 | 60 | 70 |
| Inclination Angle β (*) | 15 | 15 | 15 | 15 | 15 | 15 |
| Communicating Position of One Terminal End of Assistant Groove | 0% | 25% | 25% | 25% | 25% | 25% |
| Communicating Position of the Other Terminal End of Assistant Groove | 50% | 25% | 25% | 25% | 25% | 25% |
| Drainage Characteristics | 100 | 102 | 106 | 103 | 100 | 97 |
| Uneven Wear Resistance | 100 | 97 | 103 | 105 | 105 | 103 |

As can be seen from Table 1, the present invention tires in which the inclination angles *α* of the first inclined groove portions of the middle lateral grooves range from 35 degrees to 60 degrees can improve uneven wear resistance while maintaining drainage characteristics.

### EXAMPLE 2

Prepared were test tires according to the present invention tires 4 to 6 and comparison tires 3 and 4, each having the same tire size and tread pattern as in Example 1, in which the inclination angles *α* and *β* of the first and second inclined groove portions of each middle lateral groove, the communicating position (from the outer terminal end of the one middle lateral groove) of one terminal end and communicating position (from the inner terminal end of the other middle lateral groove) of the other terminal end of each assistant groove communicating with the middle lateral grooves were as shown in Table 2. The test tires are the same in construction as in Example 1 except for the structures shown in Table 2.

Evaluation testing for drainage characteristics and uneven wear resistance was carried out on the test tires according to the test methods shown in Example 1, obtaining the results shown in Table 2.

**[Table 2]**

| | Comparison Tire 3 | Present Invention Tire 4 | Present Invention Tire 5 | Present Invention Tire 6 | Comparison Tire 4 |
|---|---|---|---|---|---|
| Inclination Angle α (* ) | 50 | 50 | 50 | 50 | 50 |
| Inclination Angle β (* ) | -10 | 0 | 15 | 30 | 40 |
| Communicating Position of One Terminal End of Assistant Groove | 25% | 25% | 25% | 25% | 25% |
| Communicating Position of the Other Terminal End of Assistant Groove | 25% | 25% | 25% | 25% | 25% |
| Drainage characteristics | 97 | 106 | 103 | 100 | 95 |
| Uneven Wear Resistance | 102 | 103 | 105 | 106 | 105 |

As can be seen from Table 2, the present invention tires in which the inclination angles of the second inclined groove portions of the middle lateral grooves range from 0 degree to 30 degrees can improve uneven wear resistance while maintaining drainage characteristics.

### EXAMPLE 3

Prepared were test tires according to the present invention tires 7 to 9 and comparison tires 5 and 6, each having the same tire size and tread pattern as in Example 1, in which the inclination angles α and β of the first and second inclined groove portions of each middle lateral groove, the communicating position (from the outer terminal end of the one middle lateral groove) of one terminal end and communicating position (from the inner terminal end of the other middle lateral groove) of the other terminal end of each assistant groove communicating with the middle lateral grooves were as shown in Table 3. The test tires are the same in construction as in Example 1 except for the structures shown in Table 3.

Evaluation testing for drainage characteristics and uneven wear resistance was carried out on the test tires according to the test methods shown in Example 1, obtaining the results shown in Table 3.

**[Table 3]**

| | Comparison Tire 5 | Present Invention Tire 7 | Present Invention Tire 8 | Present Invention Tire 9 | Comparison Tire 6 |
|---|---|---|---|---|---|
| Inclination Angle α (* ) | 50 | 50 | 50 | 50 | 50 |
| Inclination Angle β (* ) | 15 | 15 | 15 | 15 | 15 |
| Communicating Position of one Terminal End of Assistant Groove | 15% | 20% | 25% | 30% | 35% |
| Communicating Position of the Other Terminal End of Assistant Groove | 25% | 25% | 25% | 25% | 25% |
| Drainage Characteristics | 103 | 105 | 103 | 102 | 96 |
| Uneven Wear Resistance | 97 | 103 | 105 | 103 | 102 |

As can be seen from Table 3, the present invention tires in which one terminal ends of the assistant grooves communicate with the middle lateral grooves at positions ranging from 20 % to 30 % of the tire-widthwise lengths of the lateral grooves from the outer terminal ends of the middle lateral grooves can improve uneven wear resistance while maintaining drainage characteristics.

### EXAMPLE 4

Prepared were test tires according to the present invention tires 10 to 12 and comparison tires 7 and 8, each having the same tire size and tread pattern as in Example 1, in which the inclination angles *α* and *β* of the first and second inclined groove portions of each middle lateral groove, the communicating position (from the outer terminal end of the one middle lateral groove) of one terminal end and communicating position (from the inner terminal end of the other middle lateral groove) of the other terminal end of each assistant groove communicating with the middle lateral grooves were as shown in Table 4. The test tires are the same in construction as in Example 1 except for the structures shown in Table 4.

Evaluation testing for drainage characteristics and uneven wear resistance was carried out on the test tires according to the test methods shown in Example 1, obtaining the results shown in Table 4.

**[Table 4]**

| | Comparison Tire 7 | Present Invention Tire 10 | Present Invention Tire 11 | Present Invention Tire 12 | Comparison Tire 8 |
|---|---|---|---|---|---|
| Inclination Angle α (* ) | 50 | 50 | 50 | 50 | 50 |
| Inclination Angle β (* ) | 15 | 15 | 15 | 15 | 15 |
| Communicating Position of One Terminal end of Assistant Groove | 25% | 25% | 25% | 25% | 25% |
| Communicating Position of the Other Terminal End of Assistant Groove | 15% | 20% | 25% | 30% | 35% |
| Drainage Characteristics | 97 | 105 | 103 | 102 | 102 |
| Uneven wear Resistance | 102 | 103 | 105 | 103 | 100 |

As can be seen from Table 4, the present invention tires in which the other terminal ends of assistant grooves communicate with the middle lateral grooves at positions ranging from 20 % to 30 % of the tire-widthwise lengths of the lateral grooves from the inner terminal ends of the middle lateral grooves can improve uneven wear resistance while maintaining drainage characteristics.

### INDUSTRIAL APPLICABILITY

The present invention having the aforementioned excellent effects is very effectively applicable to pneumatic tires to be mounted on passenger cars in particular.

## Claims

1. A pneumatic tire having a tread surface (1) having a center region (1C), the tread surface comprising:
a first circumferential groove (2) extending in a circumferential direction (T) of the tire at an equatorial plane (EP) of the tire in the tread surface center region (1C);
second circumferential grooves (3) extending in the circumferential direction (T) of the tire on each side of the first circumferential groove (2) in the center region (1C); and
a middle rib (4, 5) on each side of the first circumferential groove (2) defined by the first circumferential groove (2) and the respective second circumferential groove (3);
middle lateral grooves (8, 9) obliquely extending in a widthwise direction of the tire and disposed at predetermined intervals in the circumferential direction (T) of the tire in the middle ribs (4, 5), only one terminal end (8b, 9b) of each of the middle lateral grooves (8) communicating with one circumferential groove (3) of the first circumferential groove (2) and the respective second circumferential groove (3), wherein the one terminal end of each middle lateral groove (8, 9) communicates with the respective second circumferential groove (3); and
an assistant groove (10, 11) provided between each of adjacent middle lateral grooves (8, 8, or 9, 9), the assistant groove (10, 11) extending in such an inclined manner that an inclination direction thereof with respect to the circumferential direction (T) of the tire is opposite to that of the middle lateral grooves (8, 8 or 9, 9), **characterized in that**:
one block (18, 19) is defined in each rib (4, 5) by the respective assistant groove (10, 11), respective adjacent middle lateral grooves (8, 8 or 9, 9) and the respective second circumferential groove (3);
the adjacent middle lateral grooves (8, 9) each include a first inclined groove portion (8X, 9X) communicating with the respective second circumferential groove (3) and a second inclined groove portion (8Y, 9Y) connected to the first inclined groove portion (8X, 9X), the first inclined groove portion (8X, 9X) having an inclination angle α ranging from 35 degrees to 60 degrees with respect to the circumferential direction (T) of the tire, the second inclined groove portion (8Y, 9Y) having an inclination angle β ranging from 0 degree to 30 degrees with respect to the circumferential direction (T) of the tire;
the assistant groove (10, 11) has opposing terminal ends (10a, 10b or 11a, 11b) that communicate with the adjacent middle lateral grooves (8, 8 or 9, 9), one terminal end (10a, 11a) of the opposing terminal ends (10a, 10b or 11a, 11b) of the assistant groove (10, 11) being located at a position ranging from 20 % to 30 % of a tire-widthwise length (L1) of one middle lateral groove (8, 9) of the adjacent middle lateral grooves (8, 8 or 9, 9), from the one terminal end (8b, 9b) of the one middle lateral groove (8, 9) toward a side of the other terminal end (8a, 9a) of the one middle lateral groove (8, 9) in the widthwise direction of the tire, the other terminal end (10b, 11b) of the opposing terminal ends (10a, 10b or 11a, 11b) of the assistant groove (10, 11) being located at a position ranging from 20 % to 30 % of a tire-widthwise length (L2) of the other middle lateral groove (8, 9) of the adjacent middle lateral grooves (8, 8, or 9, 9) from the other terminal end (8a, 9a) of the other middle lateral groove (8, 9) toward a side of the one terminal end (8b, 9b) of the other middle lateral groove (8, 9) in the widthwise direction of the tire.

2. A pneumatic tire according to claim 1, wherein each of the first inclined groove portion (8X, 9X) and the second inclined groove portion (8Y, 9Y) extends in a straight line.

3. A pneumatic tire according to claim 1, wherein each of the first inclined groove portion (8X, 9X) and the second inclined groove portion (8Y, 9Y) extends in a curved line such that each of the inclination angles *α* and β is gradually greater toward the one terminal end (8b, 9b) side of each middle lateral groove (8, 9).

4. A pneumatic tire according to any one of claims 1 to 3, wherein the assistant groove (10, 11) extends between the first inclined groove portion (8X, 9X) of the one middle lateral groove (8, 9) of the adjacent middle lateral grooves (8, 8 or 9, 9) and the second inclined groove portion (8Y, 9Y) of the other middle lateral groove (8, 9) of the adjacent middle lateral grooves (8, 8 or 9, 9).

5. A pneumatic tire according to claim 1, wherein each second circumferential groove (3) has a width (W2) that is one to three times greater than a width (W1) of the first circumferential groove (2).

6. A pneumatic tire according to any preceding claim, wherein a sum of the widths (W1, W2) of the circumferential grooves (2, 3) is 20 % to 35 % of a contact width (K) of the tire.

7. A pneumatic tire according to any preceding claim, wherein the other terminal end (8a, 9a) of each middle lateral groove (8, 9) is away from the first circumferential groove (2), a distance (F) between the first circumferential groove (2) and the other terminal end (8a, 9a) of each middle lateral groove (8, 9) away therefrom being 20 % to 40 % of a width (W1) of the first circumferential groove (2).

8. A pneumatic tire according to any preceding claim, wherein the tread surface further comprises an outer rib (6, 7) formed tire-widthwisely outwardly of each second circumferential groove (3), outer lateral grooves (14, 15) being disposed at predetermined intervals in the circumferential direction (T) of the tire in the outer ribs (6, 7), each of the outer lateral grooves (14, 15) extending tire-widthwisely outwardly from a position away from the respective second circumferential groove (3), each of the outer lateral grooves (14, 15) having a width (W3) of 20 % to 60 % of a width (W2) of the respective second circumferential groove (3).

9. A pneumatic tire according to claim 8, wherein a distance (A) between the respective second circumferential groove (3) and each of the outer lateral grooves (14, 15) away therefrom is 20 % to 50 % of the width W2 of the respective second circumferential groove (3).

10. A pneumatic tire according to claim 8 or 9, wherein the tread surface further comprises: a lateral narrow groove (12, 13) extending in the widthwise direction of the tire between each of the adjacent middle lateral grooves (8, 8 or 9, 9), the lateral narrow groove (12, 13) being smaller in width than the adjacent middle lateral grooves (8, 8 or 9, 9), the lateral narrow grooves (12, 13) and the middle lateral grooves (8, 9) being alternately disposed in each circumferential direction (T) of the tire in each of the middle ribs (4, 5); and an outer lateral narrow groove (16, 17) extending in the widthwise direction of the tire between each of the adjacent outer lateral grooves (14, 14 or 15, 15), the outer lateral narrow groove (16, 17) being smaller in width than the adjacent outer lateral grooves (14, 14 or 15, 15), the outer lateral narrow grooves (16, 17) and the outer lateral grooves (14, 15) being alternately disposed in the circumferential direction (T) of the tire in the outer rib (6, 7).

## Patentansprüche

1. Pneumatischer Reifen, der eine Lauffläche (1) aufweist, die einen Zentrumsbereich (1C) aufweist, wobei die Lauffläche umfasst:
eine erste Umfangsrille (2), die sich in einer Umfangsrichtung (T) des Reifens an einer Äquatorebene (EP) des Reifens in dem Zentrumsbereich (1C) der Lauffläche erstreckt;
eine zweite Umfangsrille (3), die sich in der Umfangsrichtung (T) des Reifens auf jeder Seite der ersten Umfangsrille (2) in dem Zentrumsbereich (1C) erstreckt; und
eine mittlere Rippe (4, 5) auf jeder Seite der ersten Umfangsrille (2), die durch die erste Umfangsrille (2) und die entsprechende zweite Umfangsrille (3) definiert ist;
mittlere seitliche Rillen (8, 9), die sich in einer Breitenrichtung des Reifens schräg erstrecken und in bestimmten Abständen in der Umfangsrichtung (T) des Reifens in den mittleren Rippen (4, 5) angeordnet sind, wobei lediglich ein Anschlussende (8b, 9b) von jeder der mittleren seitlichen Rillen (8) mit einer Umfangsrille der ersten Umfangsrille (2) und der entsprechenden zweiten Umfangsrille (3) kommuniziert, wobei das eine Anschlussende von jeder mittleren seitlichen Rille (8, 9) mit der entsprechenden zweiten Umfangsrille (3) kommuniziert; und
eine Hilfsrille (10, 11), die zwischen jeder der benachbarten mittleren seitlichen Rillen (8, 8 oder 9, 9) vorgesehen ist, wobei die Hilfsrille (10, 11) sich auf eine solche geneigte Weise erstreckt, dass die Neigungsrichtung derselben bezüglich der Umfangsrichtung (T) des Reifens der der mittleren seitlichen Rillen (8, 8 oder 9, 9) entgegengesetzt ist, **dadurch gekennzeichnet, dass:**
ein Block (18, 19) in jeder Rippe (4, 5) durch die entsprechende Hilfsrille (10, 11), entsprechende benachbarte seitliche Rillen (8, 8 oder 9, 9) und die entsprechende zweite Umfangsrille (3) definiert ist;
die benachbarten mittleren seitlichen Rillen (8, 9) jeweils einen ersten geneigten Rillenabschnitt (8X, 9X), der mit der entsprechenden zweiten Umfangsrille (3) kommuniziert, und einen zweiten geneigten Rillenabschnitt (8Y, 9Y) enthalten, der mit dem ersten geneigten Rillenabschnitt (8X, 9X) verbunden ist, wobei der erste geneigte Rillenabschnitt (8X, 9X) einen Neigungswinkel α im Bereich von 35 Grad bis 60 Grad bezüglich der Umfangsrichtung (T) des Reifens aufweist, wobei der zweite geneigte Rillenabschnitt (8Y, 9Y) einen Neigungswinkel β im Bereich von 0 Grad bis 30 Grad bezüglich der Umfangsrichtung (T) des Reifens aufweist;
die Hilfsrille (10, 11) gegenüberliegende Anschlussenden (10a, 10b oder 11a, 11b) aufweist, die mit den benachbarten mittleren seitlichen Rillen (8, 8 oder 9, 9) kommunizieren, wobei ein Anschlussende (10a, 11a) der gegenüberliegenden Anschlussenden (10a, 10b oder 11a, 11b) der Hilfsrille (10, 11) an einer Position im Bereich von 20% bis 30% einer Reifenbreitenlänge (L1) einer mittleren seitlichen Rille (8, 9) der benachbarten mittleren seitlichen Rillen (8, 8 oder 9, 9) von dem einen Anschlussende (8b, 9b) der einen mittleren seitlichen Rille (8, 9) zu einer Seite des anderen Anschlussendes (8a, 9a) der einen mittleren seitlichen Rille (8, 9) in der Breitenrichtung des Reifens positioniert ist, wobei das andere Anschlussende (10b, 11b) der gegenüberliegenden Anschlussenden (10a, 10b oder 11a, 11b) der Hilfsrille (10, 11) an einer Position im Bereich von 20% bis 30% einer Reifenbreitenlänge (L2) der anderen mittleren seitlichen Rille (8, 9) der benachbarten mittleren seitlichen Rillen (8, 8 oder 9, 9) von dem anderen Anschlussende (8a, 9a) der anderen mittleren seitlichen Rille (8, 9) zu einer Seite des einen Anschlussendes (8b, 9b) der anderen mittleren seitlichen Rille (8, 9) in der Breitenrichtung des Reifens positioniert ist.

2. Pneumatischer Reifen nach Anspruch 1, bei dem sowohl der erste geneigte Rillenabschnitt (8X, 9X) als auch der zweite geneigte Rillenabschnitt (8Y, 9Y) sich entlang einer geraden Linie erstreckt.

3. Pneumatischer Reifen nach Anspruch 1, bei dem sowohl der erste geneigte Rillenabschnitt (8X, 9X) als auch der zweite geneigte Rillenabschnitt (8Y, 9Y) sich so entlang einer gekrümmten Linie erstreckt, dass jeder der Neigungswinkel α und β zu einer Seite des einen Anschlussendes (8b, 9b) jeder mittleren seitlichen Rille (8, 9) allmählich größer wird.

4. Pneumatischer Reifen nach einem der Ansprüche 1 bis 3, bei dem die Hilfsrille (10, 11) sich zwischen dem ersten geneigten Rillenabschnitt (8X, 9X) der einen mittleren seitlichen Rille (8, 9) der benachbarten mittleren seitlichen Rillen (8, 8 oder 9, 9) und dem zweiten geneigten Rillenabschnitt (8Y, 9Y) der anderen mittleren seitlichen Rille (8, 9) der benachbarten mittleren seitlichen Rillen (8, 8 oder 9, 9) erstreckt.

5. Pneumatischer Reifen nach Anspruch 1, bei dem jede zweite Umfangsrille (3) eine Breite (W2) aufweist, die ein bis drei Mal größer als eine Breite (W1) der ersten Umfangsrille (2) ist.

6. Pneumatischer Reifen nach einem der vorhergehenden Ansprüche, bei dem eine Summe der Breiten (W1, W2) der Umfangsrillen (2, 3) 20% bis 35% einer Kontaktbreite (K) des Reifens beträgt.

7. Pneumatischer Reifen nach einem der vorhergehenden Ansprüche, bei dem das andere Anschlussende (8a, 9a) jeder mittleren seitlichen Rille (8, 9) von der ersten Umfangsrille (2) entfernt ist, wobei ein Abstand (F) zwischen der ersten Umfangsrille (2) und dem anderen Anschlussende (8a, 9a) von jeder mittleren seitlichen Rille (8, 9) davon weg 20% bis 40% einer Breite (W1) der ersten Umfangsrille (2) beträgt.

8. Pneumatischer Reifen nach einem der vorhergehenden Ansprüche, bei dem die Lauffläche ferner eine Außenrippe (6, 7) umfasst, die in der Reifenbreitenrichtung bezüglich jeder zweiten Umfangsrille (3) außen ausgebildet ist, wobei seitliche Außenrillen (14, 15) in bestimmten Abständen in der Umfangsrichtung jedes Reifens in den Außenrippen (6, 7) angeordnet sind, wobei jede der seitlichen Außenrillen (14, 15) sich in der Reifenbreitenrichtung von einer Position von der entsprechenden zweiten Umfangsrille (3) weg nach außen erstreckt, wobei jede der seitlichen Außenrillen (14, 15) eine Breite (W3) von 20% bis 60% einer Breite (W2) der entsprechenden zweiten Umfangsrille (3) aufweist.

9. Pneumatischer Reifen nach Anspruch 8, bei dem ein Abstand (A) zwischen der entsprechenden zweiten Umfangsrille (3) und jeder der seitlichen Außenrillen (14, 15) davon weg 20% bis 50% der Breite (W2) der entsprechenden zweiten Umfangsrille (3) beträgt.

10. Pneumatischer Reifen nach Anspruch 8 oder 9, bei dem die Lauffläche ferner umfasst: eine seitliche schmale Rippe (12, 13), die sich in der Breitenrichtung des Reifens zwischen jeder der benachbarten mittleren seitlichen Rillen (8, 8 oder 9, 9) erstreckt, wobei die Breite der seitlichen schmalen Rille (12, 13) kleiner als die der benachbarten mittleren seitlichen Rillen (8, 8 oder 9, 9) ist, wobei die seitlichen schmalen Rillen (12, 13) und die mittleren seitlichen Rillen (8, 9) in der Umfangsrichtung (T) des Reifens in jeder der mittleren Rippen (4, 5) abwechselnd angeordnet sind; und eine seitliche schmale Außenrippe (16, 17), die sich in der Breitenrichtung des Reifens zwischen jeder der benachbarten seitlichen Außenrillen (14, 14 oder 15, 15) erstreckt, wobei die Breite der seitlichen schmalen Außenrille (16, 17) kleiner als die der benachbarten seitlichen Außenrillen (14, 14 oder 15, 15) ist, wobei die seitlichen schmalen Außenrillen (16, 17) und die seitlichen Außenrillen (14, 15) in der Umfangsrichtung (T) des Reifens in der Außenrippe (6, 7) abwechselnd angeordnet sind.

## Revendications

1. Bandage pneumatique ayant une surface de bande de roulement (1) ayant une région centrale (1C), la surface de bande de roulement comprenant:
une première rainure circonférentielle (2) s'étendant dans une direction circonférentielle (T) du bandage selon un plan équatorial (EP) du bandage dans la région centrale (1C) de la surface de bande de roulement;
des deuxièmes rainures circonférentielles (3) s'étendant dans la direction circonférentielle (T) du bandage sur chaque côté de la première rainure circonférentielle (2) dans la région centrale (1C); et
une nervure médiane (4, 5) sur chaque côté de la première rainure circonférentielle (2) définie par la première rainure circonférentielle (2) et la deuxième rainure circonférentielle respective (3);
des rainures latérales médianes (8, 9) s'étendant en biais dans le sens de la largeur du bandage et disposées à des intervalles prédéterminés dans la direction circonférentielle (T) du bandage dans les nervures médianes (4, 5), seulement une extrémité terminale (8b, 9b) de chacune des rainures latérales médianes (8) communiquant avec une rainure circonférentielle (3) de la première rainure circonférentielle (2) et la deuxième rainure circonférentielle respective (3), où une extrémité terminale précitée de chaque rainure latérale médiane (8, 9) communique avec la deuxième rainure circonférentielle respective (3); et
une rainure d'assistance (10, 11) réalisée entre chacune des rainures latérales médianes adjacentes (8, 8 ou 9, 9), la rainure d'assistance (10, 11) s'étendant de telle manière inclinée que sa direction d'inclinaison par rapport à la direction circonférentielle (T) du bandage soit opposée à celle des rainures latérales médianes (8, 8 ou 9, 9), **caractérisé en ce que:**
un bloc (18, 19) est défini dans chaque nervure (4, 5) par la rainure d'assistance respective (10, 11), les rainures latérales médianes adjacentes respectives (8, 8 ou 9, 9) et la deuxième rainure circonférentielle respective (3) ;
les rainures latérales médianes adjacentes (8, 9) comprennent chacune une première portion de rainure inclinée (8X, 9X) communiquant avec la deuxième rainure circonférentielle respective (3) et une deuxième portion de rainure inclinée (8Y, 9Y) reliée à la première portion de rainure inclinée (8X, 9X), la première portion de rainure inclinée (8X, 9X) ayant un angle d'inclinaison α de 35 degrés à 60 degrés par rapport à la direction circonférentielle (T) du bandage, la deuxième portion de rainure inclinée (8Y, 9Y) ayant un angle d'inclinaison β de 0 degré à 30 degrés par rapport à la direction circonférentielle (T) du bandage;
la rainure d'assistance (10, 11) possède des extrémités terminales opposées (10a, 10b ou 11a, 11b) qui communiquent avec les rainures latérales médianes adjacentes (8, 8 ou 9, 9), une extrémité terminale (10a, 11a) des extrémités terminales opposées (10a, 10b ou 11a, 11b) de la rainure d'assistance (10, 11) étant située à une position de 20% à 30% d'une longueur dans le sens de la largeur du bandage (L1) d'une rainure latérale médiane (8, 9) des rainures latérales médianes adjacentes (8, 8 ou 9, 9), de l'extrémité terminale précitée (8b, 9b) de la rainure latérale médiane précitée (8, 9) vers un côté de l'autre extrémité terminale (8a, 9a) de la rainure latérale médiane précitée (8, 9) dans le sens de la largeur du bandage, l'autre extrémité terminale (10b, 11b) des extrémités terminales opposées (10a, 10b ou 11a, 11b) de la rainure d'assistance (10, 11) étant située à une position allant de 20% à 30% d'une longueur dans le sens de la largeur du bandage (L2) de l'autre rainure latérale médiane (8, 9) des rainures latérales médianes adjacentes (8, 8 ou 9, 9) depuis l'autre extrémité terminale (8a, 9a) de l'autre rainure latérale médiane (8, 9) vers un côté de l'extrémité terminale précitée (8b, 9b) de l'autre rainure latérale médiane (8, 9) dans le sens de la largeur du bandage.

2. Bandage pneumatique selon la revendication 1, dans lequel chacune de la première portion de rainure inclinée (8X, 9X) et de la deuxième portion de rainure inclinée (8Y, 9Y) s'étend selon une ligne droite.

3. Bandage pneumatique selon la revendication 1, dans lequel chacune de la première portion de rainure inclinée (8X, 9X) et de la deuxième portion de rainure inclinée (8Y, 9Y) s'étend selon une ligne courbée de sorte que chacun des angles d'inclinaison α et β augmente progressivement vers le côté de l'extrémité terminale précitée (8b, 9b) de chaque rainure latérale médiane (8, 9).

4. Bandage pneumatique selon l'une quelconque des revendications 1 à 3, dans lequel la rainure d'assistance (10, 11) s'étend entre la première portion de rainure inclinée (8X, 9X) de la rainure latérale médiane précitée (8, 9) des rainures latérales médianes adjacentes (8, 8 ou 9, 9), et la deuxième portion de rainure inclinée (8Y, 9Y) de l'autre rainure latérale médiane (8, 9) des rainures latérales médianes adjacentes (8, 8 ou 9, 9).

5. Bandage pneumatique selon la revendication 1, dans lequel chaque deuxième rainure circonférentielle (3) a une largeur (W2) qui est une à trois fois plus grande qu'une largeur (W1) de la première rainure circonférentielle (2).

6. Bandage pneumatique selon l'une quelconque des revendications précédentes, dans lequel une somme des largeurs (W1, W2) des rainures circonférentielles (2, 3) représente 20% à 35% d'une largeur de contact (K) du bandage.

7. Bandage pneumatique selon l'une quelconque des revendications précédentes, dans lequel l'autre extrémité terminale (8a, 9a) de chaque rainure latérale médiane (8, 9) est éloignée de la première rainure circonférentielle (2), une distance (F) entre la première rainure circonférentielle (2) et l'autre extrémité terminale (8a, 9a) de chaque rainure latérale médiane (8, 9) au loin de celle-ci représentant 20% à 40% d'une largeur (W1) de la première rainure circonférentielle (2).

8. Bandage pneumatique selon l'une quelconque des revendications précédentes, dans lequel la surface de bande de roulement comprend en outre une nervure extérieure (6, 7) formée dans le sens de la largeur du bandage vers l'extérieur de chaque deuxième rainure circonférentielle (3), des rainures latérales extérieures (14, 15) étant disposées à des intervalles prédéterminés dans la direction circonférentielle (T) du bandage dans les nervures extérieures (6, 7), chacune des rainures latérales extérieures (14, 15) s'étendant dans le sens de la largeur du bandage vers l'extérieur à partir d'une position au loin de la deuxième rainure circonférentielle respective (3), chacune des rainures latérales extérieures (14, 15) ayant une largeur (W3) de 20% à 60% d'une largeur (W2) de la deuxième rainure circonférentielle respective (3).

9. Bandage pneumatique selon la revendication 8, dans lequel une distance (A) entre la deuxième rainure circonférentielle respective (3) et chacune des rainures latérales extérieures (14, 15) au loin de celle-ci représente 20% à 50% de la largeur W2 de la deuxième rainure circonférentielle respective (3).

10. Bandage pneumatique selon la revendication 8 ou 9, dans lequel la surface de la bande de roulement comprend en outre: une rainure latérale étroite (12, 13) s'étendant dans le sens de la largeur du bandage entre chacune des rainures latérales médianes adjacentes (8, 8 ou 9, 9), la rainure latérale étroite (12, 13) étant plus petite en largeur que les rainures latérales médianes adjacentes (8, 8 ou 9, 9), les rainures latérales étroites (12, 13) et les rainures latérales médianes (8, 9) étant alternativement disposées dans chaque direction circonférentielle (T) du bandage dans chacune des nervures médianes (4, 5); et une rainure latérale étroite extérieure (16, 17) s'étendant dans le sens de la largeur du bandage entre chacune des rainures latérales extérieures adjacentes (14, 14 ou 15, 15), la rainure latérale étroite extérieure (16, 17) étant plus petite en largeur que les rainures latérales extérieures adjacentes (14, 14 ou 15, 15), les rainures latérales étroites extérieures (16, 17) et les rainures latérales extérieures (14, 15) étant alternativement disposées dans la direction circonférentielle (T) du bandage dans la nervure extérieure (6, 7).
